# EUROPEAN PATENT APPLICATION

(11) **EP 4 651 404 A1**
(43) Date of publication of application: **19.11.2025**
(21) Application number: 23931783.7
(22) Date of filing: 10.11.2023
(51) Int. Cl.: H04B 17/391

(54) **DATA SET SENDING METHOD, DATA SET RECEIVING METHOD, DEVICE, AND STORAGE MEDIUM**

(30) Priority: 07.04.2023 CN 202310403694
(71) Applicant: ZTE Corporation, Shenzhen, Guangdong 518057 (CN)
(72) Inventor: LU, Zhaohua, Shenzhen, Guangdong 518057 (CN); LIU, Wenfeng, Shenzhen, Guangdong 518057 (CN); XIAO, Huahua, Shenzhen, Guangdong 518057 (CN); ZHENG, Guozeng, Shenzhen, Guangdong 518057 (CN); GAO, Bo, Shenzhen, Guangdong 518057 (CN)
(74) Representative: Ziebig Hengelhaupt Intellectual Property Attorneys Patentanwaltskanzlei PartGmbB
(86) International application number: PCT/CN2023/131000
(87) International publication number: WO 2024/207736

(57) **Abstract**

The present invention provides a data set sending method, a data set receiving method, a device, and a storage medium. The data set sending method comprises: acquiring N samples on the basis of measurement of a reference signal resource set, N being a positive integer; on the basis of a preset rule, screening the N samples to obtain M samples for constituting a data set, M being a positive integer less than or equal to N; and sending the data set.

## Description

The present disclosure claims a priority of Chinese Patent Application No. 202310403694.2, filed on April 7, 2023, the entire content of which is incorporated into this application by reference.

### TECHNICAL FIELD

The present disclosure relates to the field of communication technologies, and in particular, to a data set sending method, a data set receiving method, an apparatus, and a storage medium.

### BACKGROUND

A wireless communication system is applied widely in people's daily life and production. For example, the wireless communication system is applied in video transmission, voice transmission, positioning, machine-to-machine (M2M) communication in industrial field, device-to-device (D2D) communication, and communication between vehicles and other devices in the Internet of Vehicles (loV). More and wider applications also put forward increasingly higher requirements on transmission reliability, capacity, transmission rate, etc., of wireless communication technologies, and at the same time, while also driving rapid development in the wireless communication field.

### SUMMARY

In a first aspect, embodiments of the present disclosure provide a data set sending method, applied to a first communication node. The method includes:
acquiring N samples based on a measurement for a reference signal resource set, where N is a positive integer;
screening out M samples for constituting a data set from the N samples based on a preset rule, where M is a positive integer less than or equal to N; and
sending the data set.

In a second aspect, the embodiments of the present disclosure provide a data set receiving method, applied to a second communication node. The method includes:
receiving a data set, where the data set includes M samples, the M samples are screened out from N samples based on a preset rule, N is a positive integer, and M is a positive integer less than or equal to N.

In a third aspect, the embodiments of the present disclosure provide a communication apparatus located at a first communication node. The communication apparatus includes:
an acquiring unit, configured to acquire N samples based on a measurement for a reference signal resource set, where N is a positive integer;
a processing unit, configured to screen out M samples for constituting a data set from the N samples based on a preset rule, where M is a positive integer less than or equal to N; and
a sending unit, configured to send the data set.

In a fourth aspect, the embodiments of the present disclosure provide a communication apparatus located at a second communication node. The communication apparatus includes:
a receiving unit, configured to receive a data set, where the data set includes M samples, the M samples are screened out from N samples based on a preset rule, N is a positive integer and M is a positive integer less than or equal to N.

In a fifth aspect, the embodiments of the present disclosure provide a communication apparatus. The communication apparatus includes: a processor and a memory. The memory has instructions executable by the processor stored thereon. The processor is configured, upon executing the instructions, to enable the communication apparatus to implement any method provided in the above-mentioned first aspect or second aspect.

In a sixth aspect, the embodiments of the present disclosure provide a computer-readable storage medium. The computer-readable storage medium stores computer instructions. The computer instructions, upon being executed on a computer, enable the computer to perform any method provided in the above-mentioned first aspect or second aspect.

In a seventh aspect, the embodiments of the present disclosure provide a computer program product containing computer instructions. The computer instructions, upon being executed on a computer, enable the computer to perform any method provided in the above-mentioned first aspect or second aspect.

### BRIEF DESCRIPTION OF THE DRAWINGS

FIG. 1 is a schematic diagram of an architecture of a communication system according to some embodiments.
FIG. 2 is a flowchart of a data set sending method according to some embodiments.
FIG. 3 is a schematic diagram of a scenario of a data set transmission according to some embodiments.
FIG. 4 is a schematic diagram of a bitmap sequence according to some embodiments.
FIG. 5 is a flowchart of a data set receiving method according to some embodiments.
FIG. 6 is a schematic structural diagram of a communication apparatus according to some embodiments.
FIG. 7 is a schematic structural diagram of another communication apparatus according to some embodiments.
FIG. 8 is a schematic structural diagram of yet another communication apparatus according to some embodiments.

### DETAILED DESCRIPTION

In order to make those of skill in the art to better understand the technical solutions of the embodiments of the present disclosure, the technical solutions in the embodiments of the present disclosure will be described below clearly and completely in conjunction with the drawings in the embodiments of the present disclosure. It is obvious that the described embodiments are merely a part but not all of the embodiments of the present disclosure. All other embodiments obtained based on the embodiments of the present disclosure by those of ordinary skill in the art without any creative effort shall belong to the protection scope of the present disclosure.

In the description of the present disclosure, unless otherwise stated, "/" means "or", for example, "A/B" may mean A or B. Herein, "and/or" is merely to describe an associated relationship between associated objects, which represents that there may be three kinds of relationships. For example, A and/or B may mean: only A, only B, and A and B. In addition, "at least one" means one or more, and "a/the plurality of/multiple" means two or more than two. The wordings, such as "first", "second", etc., do not limit a quantity and an execution order, and the wordings, such as "first" or "second", etc., do not limit those objects are different.

It should be noted that in the present disclosure, the wordings, such as "exemplarily" or "for example", etc., are used to express examples, instances, or illustrations. Any embodiments or design solutions described by "exemplarily" or "for example" in the present disclosure should not be interpreted as being more preferred or advantageous than other embodiments or design solutions. Rather, the usage of expressions, such as "exemplarily" or "for example", etc., is intended to present relevant concepts in a detailed manner.

In some technologies, artificial intelligence (AI) algorithms have become a key technology for driving the evolution and performance improvement of the physical layer in wireless communications. Generally, the artificial intelligence algorithms are a type of data-driven technology whose design and training both depend on a large number of data sets, and the quality of the data sets directly affects the performance of the artificial intelligence algorithms and models. A base station configures and transmits a reference signal resource set for collecting data. A terminal captures data by measuring the configured reference signal resource set and reports the captured data to the base station. Meanwhile, due to occurrences of events, such as building obstruction, link failure, part of the data captured by the terminal may be invalid. The terminal reports all captured data to the base station, which will result in a relatively large reporting overhead of the data set and a relatively low utilization rate of the transmission resource.

In this regard, the embodiments of the present disclosure provide a data set sending method and a data set receiving method, which may reduce the reporting overhead of the data set and improve the utilization rate of the transmission resources by screening out part of invalid data from the captured data firstly and then constituting the data set with the remaining valid data.

The technical solutions provided in the embodiments of the present disclosure may be applied to various mobile communication networks, e.g., a new radio (NR) mobile communication network adopting the 5th generation mobile communication technology (5th generation mobile networks, 5G), a future mobile communication network, or a multi-communication fusion system, etc., which are not limited in the embodiments of the present disclosure.

The network architecture of the mobile communication networks (including but not limited to 3G, 4G, 5G and future mobile communication networks) in the embodiments of the present disclosure may include a network-side device (e.g., including but not limited to a base station) and a receiving-side device (e.g., including but not limited to a terminal). It should be understood that, in the example, in a downlink, a first communication node (may also be referred to as a first communication node device) may be a base station-side device, and a second communication node (may also be referred to as a second communication node device) may be a terminal-side device. Of course, in an uplink, the first communication node may also be a terminal-side device, and the second communication node may also be a base station-side device. In a case where device-to-device communication is performed between two communication nodes (i.e., the first communication node and the second communication node), both the first communication node and the second communication node may be base stations or terminals. The first communication node and the second communication node may be abbreviated as a first node and a second node, respectively.

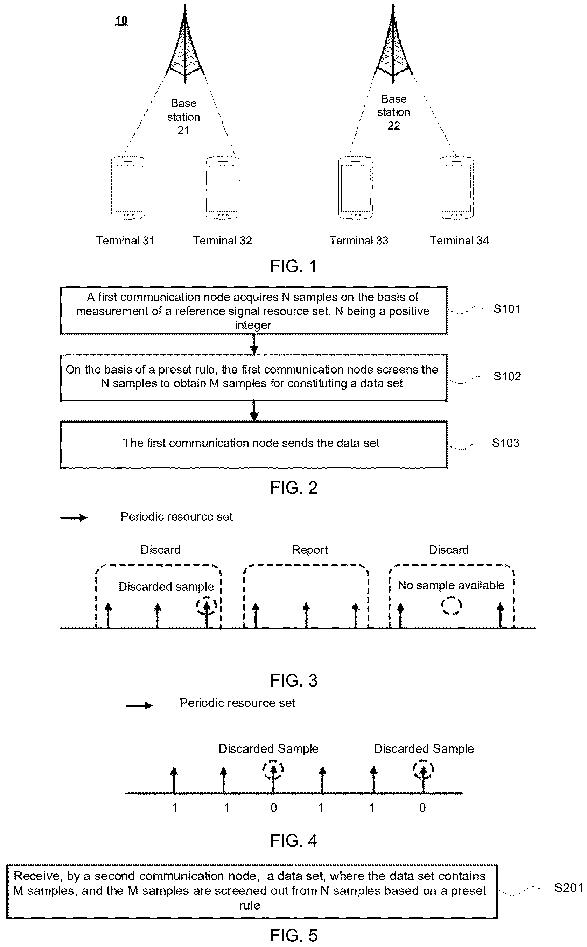

Exemplarily, the network-side device being a base station and the receiving-side device being a terminal is taken as an example. FIG. 1 is a schematic diagram of an architecture of a communication system according to some embodiments. As shown in FIG. 1, a communication system 10 includes a plurality of base stations (e.g., a base station 21 and a base station 22) and a plurality of terminals (e.g., a terminal 31, a terminal 32, a terminal 33, and a terminal 34). The plurality of base stations may be communicatively connected with the plurality of terminals.

In some embodiments, the base station is used to provide a wireless access service to a plurality of terminals. For example, a base station provides a service coverage area (also referred to as a cell). A terminal entering the area may communicate with the base station through a wireless signal, whereby receiving the wireless access service provided by the base station. There may be overlapping between service coverage areas of base stations, and a terminal located in an overlapping area may receive wireless signals from a plurality of base stations.

In some embodiments, the base station may be connected to a plurality of terminal devices (e.g., the base station 21 is connected to the terminal 31 and the terminal 32). The terminal 31 and the terminal 32 may be located in a same cell, or the terminal 31 and the terminal 32 may also be located in different cells, respectively. That is, a base station may provide a network service to a terminal in a cell, or may also provide a network service to terminals in multiple cells at the same time.

In some embodiments, the base station may be a base station or an evolutional base station (evolutional node B, eNB or eNodeB) in long term evolution (LTE) and long term evolution advanced (LTEA); a base station device in a 5G network; or a base station in a future communication system, etc. The base station may include various devices at the network-side, such as various macro base stations, micro base stations, home base stations, wireless remote devices (e.g., remote radio unit (RRU)), reconfigurable intelligent surfaces (RISs), routers, wireless fidelity (WIFI) devices, or primary cells and secondary cells, etc.

In some embodiments, the terminal may be a device with a wireless transceiving function. The terminal may be deployed on land (e.g., indoor or outdoor, handheld, wearable or vehicle-mounted). The terminal may also be deployed on water (e.g., on a ship, etc.). The terminal may also be deployed in air (e.g., on an airplane, on a balloon, on a satellite, etc.). The terminal may be a mobile phone, a pad, a computer with a wireless transceiving function, a virtual reality (VR) terminal, an augmented reality (AR) terminal, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal may also be sometimes referred to as a user, a user equipment (UE), an access terminal, a UE unit, a UE station, a mobile station, a mobile radio station, a remote station, a remote terminal, a mobile device, a UE terminal, a wireless communication device, a UE agent, a UE device, etc., which are not limited in the embodiments of the present disclosure.

In some embodiments, a higher layer signaling includes, but is not limited to: radio resource control (RRC) and media access control-control element (MAC CE), or other higher layer signalings above a physical layer. A physical layer signaling includes but is not limited to: downlink control information and uplink control information. As an example, the physical layer signaling may be transmitted on a physical downlink control channel (PDCCH) between the base station and the terminal, and the physical layer signaling may also be transmitted on a physical uplink control channel (PUCCH) between the base station and the terminal.

In some embodiments, an indicator of a parameter may also be referred to as an index or an identifier (ID), where the indicator, the identifier and the index are equivalent concepts. For example, a resource identifier of a wireless system may also be referred to as a resource indicator or a resource index. The resource identifier of the wireless system includes, but is not limited to one of identifiers corresponding to a reference signal resource, a reference signal resource group, configuration of reference signal resource, a channel state information (CSI) report, a CSI report set, a terminal, a base station, a panel, a neural network, a sub-neural network, a neural network layer, etc. The base station may indicate an identifier of a resource or a group of resources to the terminal through various high layer signalings or physical layer signalings. The terminal may feed back an identifier of a resource or a group of resources to the base station through various high layer signalings and/or physical layer signalings.

In some embodiments, a time slot may be a slot or a mini slot. A slot or a mini slot includes at least one symbol. A symbol refers to a time unit in a subframe, a frame or a slot, for example, the symbol may be an orthogonal frequency division multiplexing (OFDM) symbol, a single-carrier frequency division multiple access (SC-FDMA) symbol, an orthogonal frequency division multiple access (OFDMA) symbol, etc.

In some embodiments, the transmission includes sending or receiving. For example, data is sent or a signal is sent; or data is received or a signal is received.

In some embodiments, in order to calculate channel state information or perform channel estimation, mobility management, positioning, etc., a base station or a user needs to send a reference signal (RS). The reference signal includes, but is not limited to: a channel-state information reference signal (CSI-RS) (e.g., CSI-RS includes a zero power CSI-RS (ZP CSI-RS) and a non-zero power CSI-RS (NZP CSI-RS)), a channel-state information-interference measurement (CSI-IM) signal, a sounding reference signal (SRS), a synchronization signal block (SSB), a physical broadcast channel (PBCH), and a synchronization signal block/physical broadcast channel (SSB/PBCH). NZP CSI-RS may be used to measure a channel or an interference; and CSI-RS may also be used for tracking, referred to as a tracking reference signal (e.g., a CSI-RS for Tracking (TRS)); while CSI-IM signal is generally used to measure an interference, and SRS is used to measure an uplink channel. In addition, a resource element (RE) set included in a time-frequency resource used for transmitting a reference signal is referred to as a reference signal resource, e.g., a CSI-RS resource, an SRS resource, a CSI-IM resource, or an SSB resource. In the embodiments of the present disclosure, SSB includes a synchronization signal block and/or a physical broadcast channel.

In some embodiments, in order to save signaling overhead, etc., multiple reference signal resources may be classified into multiple sets (e.g., a CSI-RS resource set, a CSI-IM resource set, an SRS resource set). The reference signal resource set includes at least one reference signal resource, and all multiple reference signal resource sets may come from a same reference signal resource setting (e.g., a CSI-RS resource setting, or an SRS resource setting, where the CSI-RS resource setting may be merged with the CSI-IM resource setting, both referred to as the CSI-RS resource setting) to configure parameter information.

In some embodiments, the base station configures measurement resource information. The measurement resource information is used to acquire channel state information. The measurement resource information includes CN pieces of channel measurement resource (CMR) information and/or CM pieces of interference measurement resource (IMR) information, where CN and CM are positive integers. The base station configures the measurement resource information in a report configuration (report config) or in a reporting setting. In some examples, a piece of channel measurement resource information includes at least one channel reference signal resource setting (e.g., at least one CSI-RS resource setting or at least one SRS resource setting). A piece of interference measurement resource information includes at least one interference reference signal resource setting, e.g., at least one CSI-IM resource setting. In some examples, a piece of channel measurement resource information includes at least one channel reference signal resource set, e.g., at least one CSI-RS resource set or at least one SRS resource set; and a piece of interference measurement resource information includes at least one interference reference signal resource set, e.g., at least one CSI-IM resource set. In some examples, a piece of channel measurement resource information includes at least one channel reference signal resource, e.g., at least one CSI-RS resource or at least one SRS resource; and a piece of interference measurement resource information includes at least one interference reference signal resource, e.g., at least one CSI-IM resource.

In some embodiments, a beam includes a sending beam, a receiving beam, a pair of receiving beam and sending beam, and a pair of sending beam and receiving beam. In some embodiments, a beam may be understood as a resource, e.g., a reference signal resource, a sending end spatial filter, a receiving end spatial filter, a spatial filter, a spatial receiving parameter, a sending end precoding, a receiving end precoding, an antenna port, an antenna weight vector, an antenna weight matrix, etc. A beam index may be replaced by a resource index (e.g., a reference signal resource index), since the beam may be bundled with some time-frequency-code resources for transmission. A beam may also be a transmission (sending /receiving) mode; and the transmission mode may include space division multiplexing, frequency domain/time domain diversity, beamforming, etc. In addition, the base station may perform quasi co-location (QCL) configuration for two reference signals and inform a user end to describe a channel characteristic hypothesis. The parameters involved in the quasi-co-location include at least: a Doppler spread, a Doppler shift, a delay spread, an average delay, an average gain and a spatial parameter (Spatial Rx parameter, or Spatial parameter). The spatial parameter may include a spatial reception parameter, angle information, spatial correlation of receiving beam, an average delay, and correlation of time-frequency channel response (including phase information). The angle information may include at least one of: an angle of arrival (AOA), an angle of departure (AOD), a zenith angle of departure (ZOD), or a zenith angle of arrival (ZOA). The spatial domain filtering may be at least one of: a DFT (Discrete Fourier Transform) vector, a precoding vector, a DFT matrix, a precoding matrix, or a vector constituted by a linear combination of multiple DFTs, or a vector constituted by a linear combination of multiple precoding vectors. In some embodiments, the vector and the vector is an interchangeable concept. In some embodiments, a beam pair includes a combination of a sending beam and a receiving beam.

In some embodiments, an artificial intelligence (AI) includes a device, a component, a software, and a module with self-learning, such as machine learning (ML), deep learning, reinforcement learning, transfer learning, deep reinforcement learning, meta-learning, etc. In some embodiments, the artificial intelligence is implemented by an artificial intelligence network (or referred to as a neural network), and the neural network includes multiple layers, each layer including at least one node. In an example, the neural network includes an input layer, an output layer, and at least one hidden layer. Each layer of the neural network includes but is not limited to using at least one of: a fully connected layer, a dense layer, a convolutional layer, a transposed convolutional layer, a direct connection layer, an activation function, a normalization layer, a pooling layer, etc. In some embodiments, each layer of the neural network may include a sub-neural network, e.g., a residual network block (or also referred to as a Resnet block), a dense network block (i.e., dense network), a recurrent network (i.e., recurrent neural network (RNN)), etc. An artificial intelligence network may be implemented by a model, and the model may include a neural network model. The neural network model includes a neural network model structure and/or a neural network model parameter. The neural network model structure may be abbreviated as a model structure, and the neural network model parameter may be abbreviated as a network parameter or a model parameter. The model structure defines a network architecture, such as a layer number of neural network, a size of each layer, an activation function, a link status, a size and a convolution step of a convolution kernel, a convolution type (e.g., 1D convolution, 2D convolution, 3D convolution, hollow convolution, transposed convolution, separable convolution, grouped convolution, extended convolution, etc.), and the network parameter is a weight and/or a bias of each layer in the neural network model and values thereof. A model structure may correspond to multiple sets of parameter values of different neural network models to adapt to different scenarios. The parameter of the neural network model is obtained through a manner of online training or offline training. For example, by inputting at least one sample and label, the neural network model is trained to obtain the neural network model parameters.

In some examples, a sample includes P features and Q labels. P is a positive integer, and Q is an integer greater than or equal to 0. Multiple samples constitute a data set. In some examples, a sample, e.g., a sample in supervised learning, includes a feature and a label. In an example, a sample, e.g., a sample in unsupervised learning, has only 1 feature but no label. In some examples, a sample has multiple features and a label, e.g., in a network model of supervised learning with multiple inputs and single output. In some examples, a sample includes a feature and multiple labels, e.g., in a network model of supervised learning with single input and multiple outputs. In some examples, a sample includes multiple features and multiple labels, e.g., in a network model of supervised learning with multiple inputs and multiple outputs. In some examples, a feature may be an array. In some examples, a label is also an array. In some embodiments, the array may be a vector or a matrix, or a tensor larger than two dimensions, and a dimension of the array corresponding to the sample is also referred to as a dimension of a sample array. In some embodiments, respective elements in the array may be discrete values, or may also be real values, or real values between 0 and 1, or real values between -0.5 and 0.5, etc. The array corresponding to the sample may include two arrangement types: a row-first arrangement type and a column-first arrangement type. In the row-first arrangement type, the elements in the array are arranged in a first row and then a second row, and so on. In the column-first arrangement type, the elements in the array are arranged in a first column and then a second column, and so on. It should be noted that in some examples, the elements in the array corresponding to the sample will be quantized, and different numbers of quantization bits may obtain samples with different quantization precisions, which is called a sample quantization accuracy.

In some examples, it needs to normalize the elements in the array corresponding to the label or feature to facilitate faster convergence of the network model. Normalization refers to normalizing values of elements in an array to a value in a range greater than or equal to a and less than or equal to b. There are multiple types of normalization for the sample. For example, in an example, a=-0.5, and b=0.5. In an example, a=0, and b=1. In an example, an element in the array is divided by a value with a largest absolute value among the elements in the array to achieve normalization. In an example, an element in the array is divided by a variance of the elements in the array to achieve normalization. In an example, an element in the array is divided by a fixed value (e.g., a maximum value of all elements in all samples) to achieve normalization. In an example, an element in the array is divided by a statistical value (e.g., a statistical variance of all elements in all samples) to achieve normalization. For an index value, e.g., a beam index, a CRI (CSI-RS resource indicator), an SSBRI (Synchronization Signals Block Resource Indicator), etc., normalization may be achieved through one-hot encoding.

In some embodiments, a model refers to a data flow from an original input of a sample to an output target passing through multiple linear or nonlinear components. The model includes a neural network model, a non-artificial intelligence module for processing information or its corresponding model, and a functional component or function that maps input information to output information (e.g., the mapping includes linear mapping and nonlinear mapping).

In some embodiments, each model corresponds to a model indicator (Model ID) or a model identity (Model ID). In some embodiments, the model identity may also have one of the following other equivalent names or concepts: a model index, a first identity, a function identity, a model indicator, etc.

In some examples, the model includes a model structure and model parameters. For example, the model is a neural network model, and the neural network model includes a neural network model structure and a neural network model parameter, which are used to describe the structure of the neural network and the parameter value of the neural network, respectively. A neural network model structure may correspond to multiple neural network model parameters, that is, the neural network model structures may be the same, but the corresponding neural network model parameter values may be different.

In some examples, in order to transmit data or a signal better, the base station or the terminal needs to acquire a measurement parameter. The measurement parameter may include channel state information or other parameters for characterizing the channel. The channel state information may include at least one of: channel state information-reference signal resource indicator (CSI-RS resource indicator, CRI), synchronization signals block resource indicator (SSBRI), layer 1 reference signal received power (L1 reference signal received power, L1-RSRP or RSRP), differential RSRP; layer 1 signal to interference noise ratio (L1 signal to interference noise ratio, L1-SINR or SINR), differential L1-SINR; reference signal received quality (RSRQ), channel quality indicator (CQI), precoding matrix indicator (PMI), layer indicator (LI), rank indicator (RI), and precoding information. The precoding information includes first-type precoding information, e.g., codebook-based precoding information. In some embodiments, the precoding matrix indicator is one of the codebook-based precoding information. The precoding information further includes a manner implemented based on a non-codebook (e.g., second-type precoding information, such as precoding information obtained based on advanced technologies such as AI).

In some embodiments, the terminal and the base station transmit channel state information matching with the channel information through the first-type precoding information. The first-type precoding information is precoding information constituted based on a traditional channel characteristic matrix or a quantized value of the characteristic matrix. For example, an example of the precoding information implemented based on the codebook-based method is: an N-antenna codebook in LTE (in some embodiments, N=2, 4, 8, 12, 16, 24, 32, etc.); and type I codebook, type II codebook, type II port selection codebook, enhanced type II codebook, enhanced type II selection codebook, and further enhanced type II selection codebook in NR. In some embodiments, the codebook includes L codewords, and its main principle is that the base station and the terminal save L codewords in advance according to a stipulated formula or table or dictionary. In some examples, the codeword is a vector. In some examples, the codeword is a matrix, the matrix includes r columns, and each column is also a vector. In some embodiments, respective columns of the matrix are mutually orthogonal. In some examples, the vector constituting the codeword is a 0-1 vector, that is, in the entire vector, there is only one value of 1 and the other values are zero. In some examples, the vector constituting the codeword is a discrete Fourier transform (DFT) vector. In some examples, the vector constituting the codeword is obtained by performing a tensor (Kronecker) product of two or more than two DFT vectors. In some examples, the vector constituting the codeword is obtained by connecting two or more than two DFT vectors multiplying by different phase rotations. In some examples, the vector constituting the codeword is obtained by performing a tensor (Kronecker) product of two or more DFT vectors and multiplying by a phase rotation. The base station or the terminal searches for L codewords and finds the codeword that best matches with the channel information of the terminal as the optimal codeword to transmit data or signals. In some embodiments, the channel information matching with the codeword includes but is not limited to at least one of: a distance between the codeword and the channel information being the smallest, a correlation between the codeword and the channel information being the largest, a distance of an optimal right singular vector or matrix of the codeword and of the channel information being the smallest, a correlation between an optimal right singular vector or matrix of the codeword and of the channel information being the largest, and a signal-to-noise ratio calculated by the codeword and the channel information being the largest, etc. L is an integer greater than 1, and generally, L is greater than a number of sending antennas.

In some examples, the terminal and the base station transmit channel state information matching with the channel information through the second-type precoding information, and the second-type precoding information is that the channel state information is obtained based on AI. In an example, the base station and the terminal obtain the channel state information by an encoder of an autoencoder. The autoencoder includes an encoder and a decoder, and the encoder is at the terminal-side and the decoder is at the base station-side. The terminal compresses the channel information H obtained by the encoder to obtain compressed H1, and quantizes the compressed H1 and feeds the compressed H1 back to the base station. The base station receives the quantized H1, dequantizes the quantized H1 and inputs dequantized H1 into the decoder. The decoder decompresses the dequantized H1, thereby restoring H. In an example, H includes K0 elements, the terminal selects K elements from H as H1, and quantizes H1 and feeds back the quantized H1. The base station receives the K quantized elements and dequantizes the K quantized elements, inputs the dequantized K elements into the network model. The network model outputs K0 elements as the recovery of H, thereby obtaining the precoding matrix of H. K and K0 are integers greater than 1, and K<K0. In some embodiments, all H1 passing through a compressor or the K elements selected from H are second-type precoding information. And, for the sake of simplicity, the quantized H1 is also referred to as the second-type precoding information. In an example, the second-type precoding information is a precoding matrix different from the first-type precoding information and generated by other non-AI manners. In an example, the second-type precoding information is a precoding matrix other than the first-type precoding information.

In some examples, the channel information is information that is used for describing a channel environment between communication nodes and obtained according to a reference signal (e.g., CSI-RS), e.g., a time domain channel matrix, or a frequency domain channel matrix. In some examples, the channel information is a complex matrix, and a size of the channel matrix is related to a number of sending antennas Nt, a number of receiving antennas Nr, and a resource element (RE). For example, there is at least one Nr×Nt channel matrix on a physical resource block.

In some embodiments, the beam parameter information is a layer 1 reference signal received power (L1 Reference Signal Received Power, L1-RSRP or RSRP) or a differential RSRP corresponding to at least one beam. In some embodiments, the beam parameter information is a layer 1 signal-to-interference noise ratio (L1 Signal-to-Interference Noise Ratio, L1-SINR or SINR) or a differential SINR corresponding to at least one beam. In some embodiments, the beam parameter information is a reference signal received quality (RSRQ) corresponding to at least one beam. In some embodiments, the beam parameter information is a beam angle corresponding to at least one beam (at least one of AOA, ZOA, AOD, ZOD, etc., sometimes also referred to as a horizontal angle of arrival, a vertical angle of arrival, a horizontal angle of departure, a vertical angle of departure, etc., respectively). In some embodiments, the beam parameter information is a sending beam index corresponding to at least one beam. In some embodiments, the beam parameter information is a receiving beam index corresponding to at least one beam. In some embodiments, the beam parameter information is an index of sending beam and receiving beam pair (abbreviated as a beam pair index or a beam pair) corresponding to at least one beam. In some embodiments, the beam parameter information is a beam domain receive power map (BDRPM) corresponding to at least one beam. In some embodiments, the beam parameter information is a channel state information reference signal resource indicator (CSI-RS Resource Indicator, CRI) corresponding to at least one beam. In some embodiments, the beam parameter information is a synchronization signal block resource indicator (SSBRI) or other reference signal resource indicators, e.g., SRSRI (SRS Resource Indicator), corresponding to at least one beam. In some embodiments, the beam parameter information is a combination of at least two of the following beam parameter information corresponding to at least one beam: RSRP, RSRQ, SINR, beam angle, sending beam index, receiving beam index, beam pair index, CRI, SSBRI, etc. In some embodiments, the beam parameter information is a linear value of one of RSRP, RSRQ, and SINR. In some embodiments, the beam parameter information is a logarithmic value or a decibel (DB) value of one of RSRP, RSRQ, and SINR.

In some examples, location parameter information includes but is not limited to at least one of: information related to transmission time, information related to angle, information related to received reference signal quality, information related to multipath, and coordinates of the first node (including an absolute coordinate and a relative coordinate).

In some embodiments, the information related to transmitting time includes at least one of: time of arrival (TOA), a reference signal time difference (RSTD), relative time of arrival (RTOA), a receiving and transmitting time difference (Rx-Tx time difference), and a transmitting and receiving time difference (Tx-Rx time difference).

In some examples, the information related to angle includes at least one of: angle of arrival (AOA), angle of departure (AOD), zenith angle of arrival (ZOA) and azimuth angle of departure (AOD). The angle of departure includes a zenith angle of departure (ZOD) and an azimuth angle of departure (AOA).

In some examples, the information related to received reference signal quality includes at least one of: reference signal received power (RSRP or L1-RSRP), SINR (or L1-SINR), CQI, SNR, or RSRQ.

In some embodiments, the multipath information includes but is not limited to at least one of: increasing a number of paths, increasing a relative delay of paths, increasing power of multipath, increasing a time domain response of multipath, increasing a real part and an imaginary part of the time domain response of the multipath, a path with strongest power, a first path, N paths with strongest power, moments and/or RSRPs corresponding to the N paths with the strongest power, N paths in a time window, moments and/or RSRPs corresponding to the N paths in the time window, N paths greater than a threshold, moments and/or RSRPs corresponding to the N paths greater than a threshold, and a line-of-sight/non-line-of-sight indicator (LoS/NLoS indicator).

In some examples, the beam parameter information is a subset of the channel state information, that is, the beam parameter information is the channel state information. The channel state information belongs to measurement parameters. In some examples, all the measurement parameter, channel state information, and beam parameter information belong to the measurement result, or the processing result, or the generation result.

In some examples, in order to transmit the channel state information in the physical layer, the terminal and the base station define a CSI report (CSI report or CSI report config). The CSI report defines at least one of the following parameters: a time-frequency resource used to feed back the CSI, report quality included in the CSI, a time domain type (report ConfigType) fed back by the CSI, a channel measurement resource, an interference measurement resource, a bandwidth size of measurement, etc. The CSI report may be transmitted on an uplink transmission resource, and the uplink transmission resource includes PUSCH (Physical Uplink Shared Channel) and PUCCH. The CSI report also includes a time domain characteristic, including a periodic CSI report (P-CSI), an aperiodic CSI report (AP-CSI), and semi-persistent CSI report (SP-CSI). Generally, a number of bits for transmitting P-CSI is relatively small, and P-CSI is transmitted on PUCCH; a number of bits for transmitting AP-CSI is relatively large, and AP-CSI is generally transmitted on PUSCH; and SP-CSI may be transmitted based on PUSCH or may also be transmitted based on PUCCH. P-CSI transmitted based on PUCCH is generally configured by a high layer signaling (e.g., Radio Resource Control (RRC)), SP-CSI transmitted based on PUCCH is also configured, activated or deactivated by a high layer signaling (RRC and/or MAC CE), and SP-CSI transmitted based on PUSCH is activated or deactivated by a physical layer signaling (e.g., downlink control information (DCI)). AP-CSI is triggered by DCI. The DCI is generally transmitted on a physical downlink control channel (PDCCH).

In some embodiments, the base station configures NC CSI reports that need to be fed back to the base station, to the terminal through the high layer signaling and/or the physical layer signaling. Each CSI report has an identity (ID), referred to as CSI reportID. The terminal may select MC CSI reports from the NC CSI reports according to its own computing capability or processing capability and the requirements from the base station. And, according to a resource for uplink feedback, at least one CSI report of the MC CSI reports is fed back, where NC and MC are positive integers, and MC<=NC. In an example, MC CSI reports need to be fed back, but the feedback resources of at least two of the MC reports are conflicted with each other. The conflict of the feedback resources of the two reports refers to that at least one symbol and/or at least one subcarrier in the transmission resources (e.g., PUCCH or PUSCH) corresponding to the two reports used for feedback is the same. In the embodiments of the present disclosure, feedback CSI may also be referred to as transmitting CSI or sending CSI, for example, the channel state information is carried on an uplink transmission resource for feedback or transmission. Both the uplink transmission resource and the corresponding CSI are indicated by a channel state information report. In the embodiments of the present disclosure, feeding back or transmitting a CSI report refers to feeding back the channel state information configured in the CSI report. In an example, feeding back or transmitting a CSI report refers to transmitting the content that needs to be transmitted and configured in the CSI report, through a transmission resource.

In some examples, an uplink transmission resource is allocated (or scheduled) to the first node through a high-layer signaling and/or a physical layer signaling, and the uplink transmission resource is used to transmit uplink data (e.g., channel state information or a data set). There includes two manner for allocating (or scheduling) an uplink transmission resource for the first node through the high-layer signaling and/or the physical layer signaling (e.g., dynamic grant (DG) manner (also referred to as a dynamically allocate resource in some places) and configured grant (CG) manner). The configured grant includes two types (e.g., configured grant type1, or first-type configured grant) indicated by a high layer signaling, and a configured grant type 2 (or second-type configured grant) indicated by a high layer and a physical layer signaling). The dynamic grant manner is indicated by a physical layer signaling. In some examples, the terminal transmits data through a parameter determined by the configured grant type1. The base station transmits parameters such as a time-frequency resource location, a period of CG resource, a number of hybrid-automatic-repeat-request (HARQ) courses using a CG resource, and a modulation and coding scheme (MCS) of configured grant type 1, to the terminal through an RRC signaling, and the terminal stores the parameters as a configured uplink grant. After the configured grant type 1 is configured through the RRC signaling, the terminal may use the transmission resource corresponding to the configured grant for performing uplink data transmission. In some examples, the terminal transmits data through a parameter determined by the configured grant type 2. The base station transmits parameters such as a period of CG resource, a number of HARQ processes using a CG resource, and which MCS table to be used of configured grant type 2, to the terminal through an RRC signaling. However, the time-frequency resource location, the MCS index value, etc., are transmitted to the terminal by the base station through DCI and stored by the terminal as configured uplink grant. The base station activates or deactivates the operation of transmitting uplink data by the terminal through a physical layer signaling.

In some examples, information, e.g., channel state information or a data set, is transmitted through a high layer. There are two scheduling manners for a transmission resource of uplink data transmitted on a high layer (e.g., a dynamic grant (DG) manner and a configured grant (CG) manner). Configured grant includes two types: configured grant type 1 and configured grant type 2, respectively. In some examples, the terminal transmits data through parameters determined by the configured grant type1. The base station transmits parameters such as a time-frequency resource location, a period of CG resource, a number of hybrid automatic repeat request (HARQ) courses using a CG resource, MCS of configured grant type 1, etc., to the terminal through an RRC signaling, and the terminal stores the parameters as a configured uplink grant. After the configured grant type 1 is configured through an RRC signaling, the terminal may use the transmission resource corresponding to the configuration grant for performing uplink data transmission. In some examples, the terminal transmits data through parameters determined by the configured grant type 2. The base station transmits parameters such as a period of CG resource, a number of HARQ processes using the CG resource, and which MCS table to be used of the configured grant type 2, to the terminal through an RRC signaling. However, the time-frequency resource location, an MCS index value, etc., are transmitted to the terminal by the network device through DCI and stored by the terminal as the configured uplink grant. The base station activates or deactivates the operation of transmitting uplink data by the terminal through a physical layer signaling.

As shown in FIG. 2, the embodiments of the present disclosure provide a data set sending method, and the method includes S101 to S103.

In S101, a first communication node acquires N samples based on a measurement for a reference signal resource set. N is a positive integer.

In some embodiments, the first communication node may perform measurement on a reference signal resource set configured by a second communication node, to obtain a measurement result. A measurement result obtained by measuring a reference signal resource set once may be used as a sample. The reference signal resource set includes at least one reference signal resource. The reference signal resource may be periodic, semi-persistent or non-periodic, which is not limited thereto.

In some embodiments, the second communication node may configure multiple reference signal resource sets, for example, the second communication node may configure a first reference signal resource set and a second reference signal resource set. The first communication node may perform measurements on different reference signal resource sets to obtain different samples.

In S102, the first communication node screens out M samples for constituting a data set from the N samples based on a preset rule. M is a positive integer less than or equal to N.

The preset rule may be higher-layer configured, pre-configured or pre-defined, which is not limited thereto. Exemplarily, the preset rule followed by the first communication node may be configured by the second communication node. Or, the preset rule followed by the first communication node may be configured by the first communication node itself.

In some embodiments, the preset rule represents that a first sample in the data set satisfies at least one of rules that:
the first sample is a valid sample;
a second sample associated with the first sample is a valid sample;
the first sample satisfies a time screening condition; or
the first sample is any sample in the data set.

In some embodiments, the valid sample satisfies at least one of the following requirements.

Requirement 1: a sample parameter of the valid sample satisfies a corresponding parameter threshold requirement.

In a case where the sample parameter is a positive indicator, the sample parameter satisfying the parameter threshold requirement may be understood as that the sample parameter is greater than or equal to a parameter threshold. In a case where the sample parameter is a negative indicator, the sample parameter satisfying the parameter threshold requirement may be understood as that the sample parameter is less than or equal to the parameter threshold. The above-mentioned positive indicator is an indicator with a better evaluation as its value increases, and the negative indicator is an indicator with a worse evaluation as its value decreases.

The parameter threshold may be higher-layer configured, pre-configured, or a pre-defined, which is not limited thereto. Exemplarily, the parameter threshold may be configured by the second communication node to the first communication node. It should be understood that each sample parameter may have its own corresponding parameter threshold, and different sample parameters may correspond to different parameter thresholds.

Exemplarily, in a measurement process of a reference signal resource set, all measurement results of the reference signal resources under the reference signal resource set (e.g., RSRP/SINR/RSRQ/CQI/channel matrix/eigenvector corresponding to the channel matrix/codebook corresponding to the channel matrix) are higher than preset parameter thresholds, and the samples obtained in the measurement may be considered as valid samples.

Requirement 2: a number of sample parameters in the valid sample and satisfying the parameter threshold requirement is greater than a first number threshold.

Exemplarily, it is assumed that the reference signal resource set includes 10 reference signal resources (e.g., a reference signal resource #0 to a reference signal resource #9), and the first number threshold is 5. In a measurement process of a reference signal resource set, all measurement results of the reference signal resource #0 to the reference signal resource #6 (e.g., RSRP/SINR/RSRQ/CQI/channel matrix/eigenvector corresponding to the channel matrix/codebook corresponding to the channel matrix) are higher than preset parameter thresholds. Therefore, the number of sample parameters that satisfies the reference threshold requirement (i.e., 6) is greater than the first number threshold (i.e., 5), and the samples obtained in the measurement may be considered to be valid samples.

Requirement 3: all first-type sample parameters in the valid sample satisfy the parameter threshold requirement.

Requirement 4: all second-type sample parameters in the valid sample satisfy the parameter threshold requirement.

Requirement 5: a number of first-type sample parameters in the valid sample and satisfying the parameter threshold requirement is greater than a second number threshold.

Requirement 6: a number of second-type sample parameters in the valid sample and satisfying the parameter threshold requirement is greater than a third number threshold.

A first-type sample parameter is obtained based on the measurement of the first-type reference signal resource in the reference signal resource set, and a second-type sample parameter is obtained based on the measurement of the second-type reference signal resource in the reference signal resource set or based on the reference signal resource set.

It should be understood that the division of the reference signal resource set into the first-type reference signal resource and the second-type reference signal resource may be determined according to a high layer configuration, a pre-configuration or a pre-definition. As an example, the second communication node may transmit first indication information to the first communication node, to indicate an index of the first-type reference signal resource and/or an index of the second-type reference signal resource in the reference signal resource set. As another example, the first communication node may use a part of the reference signal resources in the reference signal resource set as the first-type reference signal resource and the other part of the reference signal resources in the reference signal resource set as the second-type reference signal resource according to sizes of the resource indexes. For example, the first communication node may use first P reference signal resources with largest or smallest resource indexes in the reference signal resource set as the first-type reference signal resource, and the remaining reference signal resources as the second-type reference signal resource.

In some embodiments, the first-type sample parameter may be input data or feature data of an information processing method (e.g., an artificial intelligence model). The second-type sample parameter may be output data or label data of the information processing method.

In some embodiments, in a measurement of a reference signal resource set, all or a part of the measurement results of the first-type reference signal resources (e.g., RSRP/SINR/RSRQ/CQI/channel matrix/eigenvector corresponding to the channel matrix/codebook corresponding to the channel matrix) may be used as first-type sample parameters. For example, all measurement results of the first-type reference signal resources may be used as the first-type sample parameter, or largest first P measurement results among the measurement results of the first-type reference signal resources may be used as first-type sample parameters, where P is a positive integer. All or a part of the measurement results of the second-type reference signal resource may be used as second-type sample parameter. For example, largest first P measurement results among the measurement results of the second-type reference signal resource may be used as the second-type sample parameter; or, all or a part of the measurement results of the reference signal resource set may be used as the second-type sample parameter, for example, largest first P measurement results among the measurement results of the reference signal resource set may be used as the second-type sample parameter.

It can be understood that the first communication node may determine whether a sample is a valid sample based on the sample parameter of the sample and the corresponding parameter threshold. In a case where the sample does not satisfy the requirement that a valid sample should satisfy, it may be considered that the interference in the measurement process is large, so the accuracy of the measurement result (i.e., the sample) is low. Therefore, the sample may be regarded as an invalid sample and excluded from the data set.

In some embodiments, the first sample is a sample obtained based on the measurement of the first reference signal resource set, and the second sample is a sample obtained based on the measurement of the second reference signal resource set. There is an associated relationship between the first reference signal resource set and the second reference signal resource set. Based on this, there is an associated relationship between the first sample and the second sample.

The associated relationship between the first reference signal resource set and the second reference signal resource set includes a time constraint condition between the first reference signal resource set and the second reference signal resource set, and the time constraint relationship is used to constrain a sending time, a measuring time or a reporting time of measurement of the two reference signal resource sets.

In some embodiments, the associated relationship between the first reference signal resource set and the second reference signal resource set includes at least one of:
a sending time of the first reference signal resource set and a sending time of the second reference signal resource set are in a same time unit or in adjacent time units;
a difference between the sending time of the first reference signal resource set and the sending time of the second reference signal resource set is less than a first preset time threshold;
the measuring time of the first reference signal resource set and the measuring time of the second reference signal resource set are in a same time unit or adjacent time units;
a difference between the measuring time of the first reference signal resource set and the measuring time of the second reference signal resource set is less than a second preset time threshold;
a measurement result reporting time of the first reference signal resource set and a measurement result reporting time of the second reference signal resource set are in a same time unit or adjacent time units; or
a difference between the measurement result reporting time of the first reference signal resource set and the measurement result reporting time of the second reference signal resource set is less than a third preset time threshold.

It should be understood that for training and fine-tuning of a model, the data that needs to be collected mainly includes feature data and label data. Therefore, the second communication node may configure two mutually related reference signal resource sets (i.e., the above-mentioned first reference signal resource set and second reference signal resource set) for the first communication node to collect feature data and label data, respectively. Therefore, when a sample obtained by a measurement of a reference signal resource set is discarded due to poor quality, a sample obtained by a measurement of another reference signal resource set should also be discarded even if it is a valid sample. This can improve the transmission efficiency of the data set and improve the utilization rate of the transmission resource.

In some embodiments, the time screening condition includes at least one of the following conditions.

Condition 1: all samples in a time window corresponding to the first sample are valid samples.

Exemplarily, the time window may be a time interval configured or pre-defined by the second communication node (e.g., a base station), and the configuration of the time window includes a period of the time window, a starting time or a slot offset of the time window, and a duration of the time window. An example is given for explanation with reference to FIG. 3, where 3 samples can be captured normally in a time window. 3 valid samples are captured in a time window 2, and the 3 samples in the time window 2 may be included in the data set. 2 valid samples and 1 invalid sample are captured in a time window 1, and the 3 samples in the time window 1 are discarded, that is, the 3 samples in the time window 1 are not included in the data set.

Condition 2: a number of valid samples in the time window corresponding to the first sample is greater than a fourth number threshold.

Exemplarily, the time window may be a time interval configured or pre-defined by the second communication node (e.g., a base station), and the configuration of the time window includes a period of the time window, a starting time or a slot offset of the time window, and a duration of the time window 3. An example is given for explanation with reference to FIG. 3, where 3 samples can be captured normally in a time window. However, only 2 valid samples are captured in the time window 3, and another sample is not captured. Therefore, the 2 samples in the time window 3 are discarded.

Condition 3: there are at least P1 valid samples in a first preset time period before the time corresponding to the first sample. P1 is a positive integer. The first preset time period and the value of P1 may be higher-layer configured, pre-configured or pre-defined, which is not limited thereto.

Condition 4: there are at least P2 valid samples in a second preset time period after the time corresponding to the first sample. P2 is a positive integer. The second preset time period and the value of P2 may be higher-layer configured, pre-configured or pre-defined, which is not limited thereto.

Condition 5: all P3 consecutive samples including the first sample and in a third preset time period are valid samples. P3 is a positive integer. The third preset time period and the value of P3 may be higher-layer configured, pre-configured or pre-defined, which is not limited thereto.

Condition 6: all P4 consecutive samples including the first sample are valid samples. P4 is a positive integer. The value of P4 may be higher-layer configured, pre-configured or pre-defined, which is not limited thereto.

Condition 7: for an observation window constituted of P5 consecutive valid samples including the first sample, there are at least P6 consecutive samples in a fourth preset time period after the time corresponding to a last sample in the observation window. Both P5 and P6 are positive integers. The fourth preset time period, the value of P5 and the value of P6 may be higher-layer configured, pre-configured or pre-defined, which is not limited thereto.

Condition 8: for a prediction window constituted of P7 consecutive valid samples including the first sample, there are at least P8 consecutive samples in a fifth preset time period before the time corresponding to the first one of samples in the prediction window. Both P7 and P8 are positive integers. The fifth preset time period, the value of P7 and the value of P8 may be higher-layer configured, pre-configured or pre-defined, which is not limited thereto.

In some embodiments, the acquisition of the above-mentioned multiple consecutive samples may be obtained based on a measurement for a reference signal resource set, or may also be obtained based on measurements of multiple reference signal resource sets related to each other.

The time corresponding to the first sample represents any one of: a sending time, a measuring time, or a measurement result reporting time of the reference signal resource set corresponding to the first sample.

In some embodiments, different time domain locations of the first sample in the time window correspond to different time screening conditions. Exemplarily, the time window may be a time interval configured or pre-defined by the second communication node (e.g., a base station), and the configuration of the time window includes a period of the time window, a starting time or a slot offset of the time window, and a duration of the time window.

Exemplarily, in a case where the first sample is a last sample in the time window, a time screening rule corresponding to the first sample includes that there are at least valid samples with a first preset number in the first preset time period before the time corresponding to the first sample.

Exemplarily, in a case where the first sample is a first one of samples in the time window, the time screening rule corresponding to the first sample includes that there are at least valid samples with a second preset number in the second preset time period after the time corresponding to the first sample.

Exemplarily, in a case where the first sample is a sample other than the first one of samples and the last sample in the time window, the time screening rule corresponding to the first sample includes that: there are at least valid samples with a first preset number in the first preset time period before the time corresponding to the first sample and there are at least valid samples with a second preset number in the second preset time period after the time corresponding to the first sample.

It should be understood that, for a time domain prediction model, the time domain prediction model predicts the channel state information or the beam information at one or more future moments based on channel measurement results at multiple historical moments. Therefore, for the training and fine-tuning of the time domain prediction model, the required data is mainly constituted of two parts: feature data and label data. The feature data is constituted of samples at multiple moments in the observation window, and the label data is constituted of samples at one or more moments in the prediction window. Therefore, model training needs to collect all samples in a same observation window and a same prediction window. If a sample of all samples is discarded due to poor quality, or if a sample at a certain moment is not captured due to some reasons (e.g., the reference signal resource is not sent or measured), all samples in other related time should be discarded. This may enhance the transmission efficiency of the data set and enhance the utilization rate of the transmission resource.

In some embodiments, the sample may contain a measurement result corresponding to a target reference signal resource in the reference signal resource set. As an example, all reference signal resources in the reference signal resource set may be used as target reference signal resources. As another example, part reference signal resources of the reference signal resource set may be used as target reference signal resources. A target reference signal resource may be determined according to a high-layer configuration, a pre-configuration or a pre-definition.

In some embodiments, the second communication node may send second indication information to the first communication node, where the second indication information is used to indicate the target reference signal resource. That is, upon configuring the reference signal resource set, the second communication node may additionally identify the reference signal resource to identify whether the sample should contain the measurement result corresponding to the reference signal resource, or indicate whether the measurement result corresponding to the reference signal resource needs to be reported. For example, in a case where the transmission mode (e.g., sending beam) corresponding to the reference signal resource belongs to a transmission mode set used for collecting model input data, the measurement result corresponding to the reference signal resource should be reported. Therefore, the reference signal resource may be additionally identified as 1 when the reference signal resource set is configured. In a case where the transmission mode corresponding to the reference signal resource does not belong to the transmission mode set used for collecting the model input data, the reference signal resource may be additionally identified as 0 or not identified when the reference signal resource set is configured. Exemplarily, the transmission mode may include a beam.

In some embodiments, the target reference signal resource may be first Q reference signal resources in the reference signal resource set sorted according to a resource index. Sorting according to an index may be sorting in a descending order of indexes, or sorting in an ascending order of indexes. Q is a positive integer, and the value of Q may be higher-layer configured, pre-configured or pre-defined, which is not limited thereto.

In some embodiments, the target reference signal resource may be first K reference signal resources with largest measurement indicators in the reference signal resource set. K is a positive integer, and the value of K may be higher-layer configured, pre-configured or pre-defined, which is not limited thereto.

In some embodiments, the target reference signal resource may be first K reference signal resources with largest measurement indicators out of a reference signal resource subset and in the reference signal resource set, and/or all reference signal resources in the reference signal resource subset. K is a positive integer, and the value of K and the reference signal resource subset may be indicated by the second communication node, higher-layer configured, pre-configured or pre-defined, which is not limited thereto.

In some embodiments, the target reference signal resource may be first K reference signal resources with largest measurement indicators in the reference signal resource set, and/or all reference signal resources in the reference signal resource subset. K is a positive integer, and the value of K and the reference signal resource subset may be indicated by the second communication node, higher-layer configured, pre-configured or pre-defined, which is not limited thereto.

In some embodiments, in a spatial domain prediction process, the above-mentioned measurement result may be referred to as beam quality information, and the measurement result may include a resource index and a measurement indicator. The resource index may be CRI or SSBRI. The measurement indicator may be RSRP or SINR.

It should be understood that, in the spatial domain prediction process, the model may predict the quality information of all transmission modes based on the measurement results of part transmission modes (e.g., a sending beam or a receiving beam or a transmitting and receiving beam pair). For the training and fine-tuning of the spatial prediction model, the data that needs to be collected mainly is formed of two parts: feature data and label data. The feature data is a measurement result of a part of the transmission modes by the first communication node. The label data may be the measurement results of first K transmission modes with best quality among all transmission modes, or the measurement results of all transmission modes. The measurement result of the transmission mode is the measurement result of the reference signal resource corresponding to the transmission mode. Therefore, the second communication node and the first communication node may negotiate or predetermine the manner for determining the target transmission resources, so that the first communication node may report the valid sample to the second communication node for the training and fine-tuning of the spatial domain prediction model.

In S103, the first communication node sends a data set.

In some embodiments, in a data collecting phase, the second communication node may configure a reference signal resource set that is sent periodically, that is, the second communication node sends a reference signal resource of a same reference signal resource set at different moments. The terminal may perform measurements on the same reference signal resource set at different moments and obtain corresponding samples. In this way, multiple samples are obtained by the measurements at different moments. The first communication node may report simultaneously multiple samples obtained by measurements at different moments to the second communication node in a reporting process of a data set. In order to enable the second communication node to utilize better the samples in the data set, the second communication node may know time information of the samples in the data set. In this regard, the first communication node may inform the second communication node of the time information of the samples in the data set in an explicit or implicit manner.

In some embodiments, the implicit manner may be that, for example: the M samples in the data set are sent sequentially according to an order of measuring time. For example, the M samples are sent sequentially according to the measuring time from earliest to latest, or the M samples are sent sequentially according to the measuring time from latest to earliest. It should be understood that, since the second communication node has known the sending time or the sending period of the reference signal resource set, the second communication node may know the time information of the M samples according to a receiving order of the M samples in the data set.

Exemplarily, the M samples in the data set are sent sequentially according to the order of measuring time. For example, it may be implemented as: the M samples in the data set are arranged in the order of measuring time and in a message carrying the data set.

In some embodiments, the explicit manner is that: the first communication node may also send time information of M samples in the data set in addition to sending the data set. The time information of the sample includes a sending time, a measuring time or a measurement result reporting time of the reference signal resource set corresponding to the sample.

In some embodiments, the explicit manner may also be that: the first communication node transmits a bitmap sequence. The bitmap sequence includes multiple indicator bits, and an indicator bit is used to indicate whether the data set includes a sample captured at a moment corresponding to the indicator bit. For example, a value of the indicator bit is a first value (e.g., 0), representing that the data set does not contain the sample captured at the moment corresponding to the indicator bit; and a value of the indicator bit is a second value (e.g., 1), representing that the data set contains the sample captured at the moment corresponding to the indicator bit. Exemplarily, as shown in FIG. 4, the first communication node should be able to capture 6 valid samples under normal cases, but for some reasons sample 3 and sample 6 are discarded or not captured, and the data set only contains sample 1, sample 2, sample 4 and sample 5. Therefore, the bitmap sequence reported by the first communication node may be 110110.

In the above-mentioned embodiment, the first communication node may screen out M samples that satisfy the requirement from N samples based on a preset rule to constitute a data set, so that the data set fed back by the first communication node to the second communication node will not contain useless samples, thereby improving the transmission efficiency of the data set and reducing the overhead of the transmission resource.

FIG. 5 shows a data set receiving method applied to a second communication node according to some embodiments, and the method includes S201.

In S201, a second communication node receives a data set.

The data set contains M samples, and the M samples are screened out from N samples based on a preset rule, where M is a positive integer less than or equal to N. The introduction of the preset rule may refer to the above and will not be repeated herein.

And, the above-mentioned N samples may be acquired based on a measurement for a reference signal resource set, and the acquiring manner may also refer to the above, which will not be repeated herein.

In some embodiments, the second communication node may determine time information of the M samples according to a receiving order of the M samples in the data set.

In some embodiments, the second communication node may receive the time information of the M samples in the data set.

In some embodiments, the second communication node may receive a bitmap sequence to acquire the time information of the M samples in the data set. The bitmap sequence includes multiple indicator bits, and an indicator bit is used to indicate whether the data set includes a sample captured at a moment corresponding to the indicator bit.

In the above-mentioned embodiments, since the data set received by the second communication node includes M screened samples, it may be considered that the data set does not include useless samples, thereby improving the transmission efficiency of the data set and reducing the overhead of the transmission resource.

In addition, the detailed explanation of S201 may refer to the description of the above S101 to S103, which will not be repeated herein.

The above mainly introduces the solution provided in the present disclosure from the perspective of interaction between respective nodes. It can be understood that respective nodes, such as the second node and the first node, contain corresponding hardware structures and/or software modules to perform the respective functions. Technicians in the art should easily realize that the present disclosure can implement the algorithm steps described in conjunction with the embodiments disclosed in the present disclosure in the form of hardware or a combination of hardware and computer software. Whether a certain function is executed by hardware or computer software driven hardware depends on the specific application and design constraints of the technical solution. Professional technicians can use different methods to achieve the described functions for each specific application, but such implementation should not be considered beyond the scope of the present disclosure.

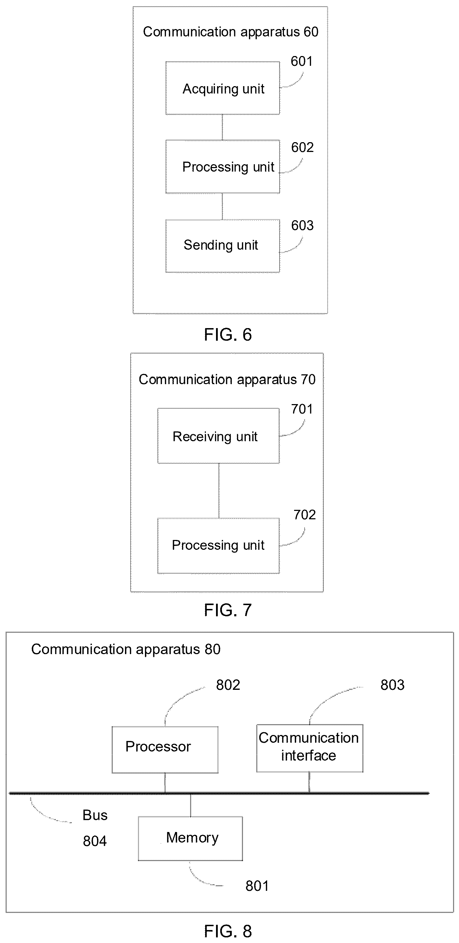

FIG. 6 is a schematic structural diagram of a communication apparatus according to some embodiments. As shown in FIG. 6, the communication apparatus 60 includes: an acquiring unit 601, a processing unit 602, and a sending unit 603. The communication apparatus 60 may be the above-mentioned first communication node or a chip in the first communication node. When the communication apparatus 60 is configured to implement the function of the first communication node in the above-mentioned embodiments, respective units are, for example, configured to implement the following functions.

In some embodiments, the acquiring unit 601 is configured to acquire N samples, where N is a positive integer. The processing unit 602 is configured to screen out M samples for constituting a data set from the N samples based on a preset rule, where M is a positive integer less than or equal to N. The sending unit 603 is configured to transmit the data set.

In some embodiments, the preset rule represents that a first sample in the data set satisfies at least one of rules that: the first sample is a valid sample; a second sample associated with the first sample is a valid sample; the first sample satisfies a time screening condition; or the first sample is any sample in the data set.

In some embodiments, the valid sample satisfies at least one of rules that: a sample parameter of the valid sample satisfies a corresponding parameter threshold requirement; a number of sample parameters satisfying the parameter threshold requirement in the valid samples is greater than a first number threshold; all first-type sample parameters in the valid sample satisfy the parameter threshold requirement; all second-type sample parameters in the valid sample satisfy the parameter threshold requirement; a number of first-type sample parameters satisfying the parameter threshold requirement in the valid sample is greater than a second number threshold; a number of second-type sample parameters satisfying the parameter threshold requirement in the valid sample is greater than a third number threshold; the first-type sample parameter is obtained based on a measurement of the first-type reference signal resource in the reference signal resource set, and the second-type sample parameter is obtained based on a measurement of the second-type reference signal resource in the reference signal resource set or is obtained based on a measurement of the reference signal resource set.

In some embodiments, the first sample is a sample obtained based on a measurement for a first reference signal resource set, the second sample is a sample obtained based on a measurement for a second reference signal resource set, and there is an associated relationship between the first reference signal resource set and the second reference signal resource set.

In some embodiments, the associated relationship between the first reference signal resource set and the second reference signal resource set satisfies at least one of associated relationships that: a sending time of the first reference signal resource set and a sending time of the second reference signal resource set are in a same time unit or adjacent time units; a difference between the sending time of the first reference signal resource set and the sending time of the second reference signal resource set is less than a first preset time threshold; a measuring time of the first reference signal resource set and a measuring time of the second reference signal resource set are in a same time unit or adjacent time units; a difference between the measuring time of the first reference signal resource set and the measuring time of the second reference signal resource set is less than a second preset time threshold; a measurement result reporting time of the first reference signal resource set and a measurement result reporting time of the second reference signal resource set are in a same time unit or adjacent time units; or a difference between the measurement result reporting time of the first reference signal resource set and the measurement result reporting time of the second reference signal resource set is less than a third preset time threshold.

In some embodiments, the time screening condition includes at least one of conditions that: all samples in a time window corresponding to the first sample are valid samples; a number of valid samples in the time window corresponding to the first sample is greater than a fourth number threshold; there are at least P1 valid samples in a first preset time period before the time corresponding to the first sample, and P1 is a positive integer; there are at least P2 valid samples in a second preset time period after the time corresponding to the first sample, and P2 is a positive integer; all P3 consecutive samples including the first sample and in a third preset time period are valid samples, and P3 is a positive integer; the time corresponding to the first sample represents any one of the transmitting time, the measuring time or the measurement result reporting time in the reference signal resource set corresponding to the first sample.

In some embodiments, different time domain locations of the first sample in the time window correspond to different time screening conditions.

In some embodiments, in a case where the first sample is a last sample in the time window, a time screening rule corresponding to the first sample includes that there are at least valid samples with a first preset number in the first preset time period before a moment for capturing the first sample; or, in a case where the first sample is a first one of samples in the time window, the time screening rule corresponding to the first sample includes that there are at least valid samples with a second preset number in a second preset time period after the moment for capturing the first sample; or, in a case where the first sample is a sample other than the first one of samples and the last sample in the time window, the time screening rule corresponding to the first sample includes that: there are at least valid samples with a first preset number in a first preset time period before the moment for capturing the first sample, and there are at least valid samples with a second preset number in a second preset time period after the moment for capturing the first sample.

In some embodiments, the M samples in the data set are sent sequentially in an order of measuring moment.

In some embodiments, the sending unit 603 is configured to send time information of the M samples.

In some embodiments, the time information of the sample includes a sending time, a measuring time or a measurement result reporting time of the reference signal resource set corresponding to the sample.

In some embodiments, the sending unit 603 is configured to transmit a bitmap sequence, where the bitmap sequence includes multiple indicator bits, and an indicator bit is used to indicate whether the data set includes a sample captured at a moment corresponding to the indicator bit.

FIG. 7 is a schematic structural diagram of another communication apparatus according to some embodiments. As shown in FIG. 7, the communication apparatus 70 includes a receiving unit 701 and a processing unit 702. The communication apparatus 70 may be the above-mentioned second communication node or a chip in the second communication node. When the communication apparatus 70 is configured to implement the function of the second communication node in the above-mentioned embodiments, respective units are configured to implement the following functions.

In some embodiments, the receiving unit 701 is configured to receive a data set, where the data set includes M samples, and the M samples are screened out from N samples based on a preset rule, where N is a positive integer and M is a positive integer less than or equal to N.

In some embodiments, the preset rule represents that a first sample in the data set satisfies at least one of rules that: the first sample is a valid sample; a second sample associated with the first sample is a valid sample; the first sample satisfies a time screening condition; or the first sample is any sample in the data set.

In some embodiments, the valid sample satisfies at least one of requirements that: a sample parameter of the valid sample satisfies a corresponding parameter threshold requirement; a number of sample parameters satisfying the parameter threshold requirement in the valid sample is greater than a first number threshold; all first-type sample parameters in the valid sample satisfy the parameter threshold requirement; all second-type sample parameters in the valid sample satisfy the parameter threshold requirement; a number of first-type sample parameters satisfying the parameter threshold requirement in the valid sample is greater than a second number threshold; a number of second-type sample parameters satisfying the parameter threshold requirement in the valid sample is greater than a third number threshold; the first-type sample parameter is obtained based on a measurement of first-type reference signal resource in the reference signal resource set, and the second-type sample parameter are obtained based on a measurement of the second-type reference signal resource in the reference signal resource set or obtained based on the reference signal resource set.

In some embodiments, the first sample is a sample obtained based on a measurement for a first reference signal resource set, the second sample is a sample obtained based on a measurement of the second reference signal resource set, and there is an associated relationship between the first reference signal resource set and the second reference signal resource set.

In some embodiments, the associated relationship between the first reference signal resource set and the second reference signal resource set satisfies at least one of associated relationship that: a sending time of the first reference signal resource set and a sending time of the second reference signal resource set are in a same time unit or adjacent time units; a difference between the sending time of the first reference signal resource set and the sending time of the second reference signal resource set is less than a first preset time threshold; a measuring time of the first reference signal resource set and a measuring time of the second reference signal resource set are in a same time unit or adjacent time units; a difference between the measuring time of the first reference signal resource set and the measuring time of the second reference signal resource set is less than a second preset time threshold; a measurement result reporting time of the first reference signal resource set and a measurement result reporting time of the second reference signal resource set are in a same time unit or adjacent time units; or a difference between the measurement result reporting time of the first reference signal resource set and the measurement result reporting time of the second reference signal resource set is less than a third preset time threshold.

In some embodiments, the time screening condition includes at least one of conditions that: all samples in a time window corresponding to the first sample are valid samples; a number of valid sample in the time window corresponding to the first sample is greater than a fourth number threshold; there are at least P1 valid samples in a first preset time period before the time corresponding to the first sample, and P1 is a positive integer; there are at least P2 valid samples in a second preset time period after the time corresponding to the first sample, and P2 is a positive integer; all P3 consecutive samples including the first sample in a third preset time period are valid samples, and P3 is a positive integer; the time corresponding to the first sample represents any one of a sending time, a measuring time or a measurement result reporting time of the reference signal resource set corresponding to the first sample.

In some embodiments, different time domain locations of the first sample in the time window correspond to different time screening conditions.

In some embodiments, in a case where the first sample is a last sample in the time window, the time screening rule corresponding to the first sample includes that there are at least valid samples with a first preset number in a first preset time period before a moment for capturing the first sample; or, in a case where the first sample is the first one of samples in the time window, the time screening rule corresponding to the first sample includes that there are at least valid samples with a second preset number in a second preset time period after the moment for capturing the first sample; or, in a case where the first sample is a sample other than the first one of samples and the last sample in the time window, the time screening rule corresponding to the first sample includes that there are at least valid samples with a first preset number in the first preset time period before the moment for capturing the first sample, and there are at least valid samples with a second preset number in the second preset time period after the moment for capturing the first sample.

In some embodiments, the processing unit 702 is configured to determine time information of the M samples according to a receiving order of the M samples in the data set.

In some embodiments, the receiving unit 701 is further configured to receive time information of the M samples.

In some embodiments, the time information of the sample includes a sending time, a measuring time or a measurement result reporting time of the reference signal resource set corresponding to the sample.

In some embodiments, the receiving unit 701 is further configured to receive a bitmap sequence, where the bitmap sequence includes multiple indicator bits, and an indicator bit is used to indicate whether the data set includes a sample captured at a moment corresponding to the indicator bit.

It should be noted that the units in FIG. 6 and FIG. 7 may also be referred to as modules. For example, the sending unit may be referred to as a transmitting module. In addition, in the embodiments shown in FIG. 6 and FIG. 7, the names of the respective units may not be the names shown in the drawings. For example, the sending unit may also be referred to as a communication unit, and the receiving unit may also be referred to as a communication unit.

When the respective units in FIG. 6 and FIG. 7 are implemented in the form of software functional modules and sold or used as independent products, they may be stored in a computer-readable storage medium. Based on this understanding, the technical solutions of the present disclosure may be essentially, or a part of the technical solutions of the present disclosure that contributes to the related technology may be, embodied in the form of software product, and the computer software product is stored in a storage medium, including several instructions for causing a computer device (which may be a personal computer, a server, or a network device, etc.) or a processor to perform all or a part of the steps of methods in the respective embodiments of the present disclosure. The storage medium for storing the computer software product includes various types of mediums capable of storing program codes, such as a U disk (universal serial bus flash drive), a mobile disk, a read-only memory (ROM), a random-access memory (RAM), a magnetic disk, or an optical disk, etc.

In a case of implementing the functions of the above-mentioned integrated modules in the form of hardware, the embodiments of the present disclosure provide a schematic structural diagram of a communication apparatus, and the communication apparatus may be the above-mentioned communication apparatus 60 or communication apparatus 70. As shown in FIG. 8, a communication apparatus 80 includes: a memory 801, a processor 802, a communication interface 803, and a bus 804.

The processor 802 may implement or execute various illustrative logical blocks, modules and circuits described in the content of the present disclosure. The processor 802 may be a central processing unit, a general-purpose processor, a digital signal processor, an application specific integrated circuit, a field programmable gate array or any other programmable logic device, a transistor logic device, a hardware component, or any combination thereof. The processor may implement or execute various illustrative logical blocks, modules and circuits described in the content of the present disclosure. The processor 802 may also be a combination capable of implementing computing functions, for example, containing a combination of one or more microprocessors, or a combination of a digital signal processor (DSP) and a microprocessor.

The communication interface 803 is configured to connect with other devices through a communication network. The communication network may be an Ethernet, a wireless access network, a wireless local area network (WLAN), etc.

The memory 801 may be, but is not limited to, a read-only memory (ROM) or other types of static storage device capable of storing static information and instructions, a random access memory (RAM) or other types of dynamic storage device capable of storing information and instructions, or an electrically erasable programmable read-only memory (EEPROM), a magnetic disk storage medium or other magnetic storage device, or any other media capable of being used to carry or store desired program codes and capable of being accessed by a computer, where the desired program codes have instructions or are in the form of data structure.

As an implementation, the memory 801 may exist independently of the processor 802, and the memory 801 may be connected to the processor 802 through the bus 804, and is used for storing instructions or program codes. The processor 802, upon calling and executing the instructions or program codes stored in the memory 801, may implement the determination method of information processing manner provided in the embodiments of the present disclosure.

In another implementation, the memory 801 may be integrated with the processor 802.

The bus 804 may be an extended industry standard architecture (EISA) bus, etc. The bus 804 may be classified into an address bus, a data bus, and a control bus. For the convenience of representation, only a thick line is used in FIG. 8 for representation, but it does not represent that there is only one bus or one type of bus.

From the description of the above-mentioned embodiments, those skilled in the art will clearly understand that, for convenience and brevity of description, an example is only given according to the above-mentioned division of functional modules. In practical applications, the above-mentioned functional allocation may be implemented by different functional modules as needed, that is, the internal structure of the second node or the first node is divided into different functional modules to complete all or a part of the functions described above.

The embodiments of the present disclosure further provide a computer-readable storage medium. All or a part of the processes in the above-mentioned method embodiments may be completed by the related hardware instructed through computer instructions. The program may be stored in the above-mentioned computer-readable storage medium, and the program, when executed, may include the processes of the above-mentioned method embodiments. The computer-readable storage medium may be an internal storage of any of the aforementioned embodiments. The above-mentioned computer-readable storage medium may also be an external storage device of the above-mentioned second node and first node, for example, a plug-in hard disk, a smart media card (SMC), a secure digital (SD) card, a flash card, etc., equipped on the above-mentioned second node and first node. Further, the above-mentioned computer-readable storage medium may further include both an internal storage unit and an external storage device of the above-mentioned second node or the first node. The above-mentioned computer-readable storage medium is configured to store the above-mentioned computer program and other programs and data required by the above-mentioned second node or first node. The above-mentioned computer-readable storage medium may also be configured to temporarily store data that has been output or is to be output. The readable storage medium includes a non-transitory computer-readable storage medium.

The embodiments of the present disclosure further provide a computer program product, and the computer program product contains a computer program. The computer program product, when executed on a computer, causes the computer to perform any determination method of information processing manner provided in the above-mentioned embodiments.

Although the present disclosure is described herein in conjunction with various embodiments, in the process of implementing the requested protection in the present disclosure, those skilled in the art can understand and implement other variations of the embodiments of the present disclosure by examining the drawings, the content the present disclosure, and the appended claims. In the claims, the wording "include/comprise" and variations thereof do not exclude other components or steps, and "a/an" or "one" does not exclude multiple situations. A single processor or other unit can implement several functions listed in the claims. Dependent claims different from each other record certain measures, but this does not mean that these measures cannot be combined to produce good results.

Although the present disclosure is described in conjunction with specific features and embodiments thereof, it will be apparent that various modifications and combinations can be made thereto without departing from the spirit and scope of the present disclosure. Accordingly, the specification and drawings herein are merely illustrative of the present disclosure as defined by the claims as attached and are deemed to cover any and all modifications, variations, combinations or equivalents within the scope of the present disclosure. Obviously, those skilled in the art can make various changes and modifications to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The above are only specific implementation of the present disclosure, but the protection scope of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. A data set sending method, **characterized in that** the method is applied to a first communication node and comprises:
acquiring N samples based on a measurement for a reference signal resource set, wherein N is a positive integer;
screening out M samples for constituting a data set from the N samples based on a preset rule, wherein M is a positive integer less than or equal to N; and
sending the data set.

2. The method according to claim 1, wherein the preset rule represents that a first sample in the data set satisfies at least one of rules that:
the first sample is a valid sample;
a second sample associated with the first sample is a valid sample; or
the first sample satisfies a time screening condition;
wherein the first sample is any sample in the data set.

3. The method according to claim 2, wherein the valid sample satisfies at least one of requirements that:
a sample parameter of the valid sample satisfies a corresponding parameter threshold requirement;
a number of sample parameters that satisfy the parameter threshold requirement and in the valid sample is greater than a first number threshold;
all first-type sample parameters in the valid sample satisfy the parameter threshold requirement;
all second-type sample parameters in the valid sample satisfy the parameter threshold requirement;
a number of first-type sample parameters that satisfy the parameter threshold requirement and in the valid sample is greater than a second number threshold; or
a number of second-type sample parameters that satisfy the parameter threshold requirement and in the valid samples is greater than a third number threshold;
wherein the first-type sample parameters are obtained by measuring a first-type reference signal resource in the reference signal resource set, and the second-type sample parameters are obtained by measuring a second-type reference signal resource in the reference signal resource set or the reference signal resource set.

4. The method according to claim 2, wherein the first sample is a sample obtained based on a measurement for a first reference signal resource set, the second sample is a sample obtained based on a measurement for a second reference signal resource set, and there is an associated relationship between the first reference signal resource set and the second reference signal resource set.

5. The method according to claim 4, wherein the associated relationship between the first reference signal resource set and the second reference signal resource set satisfies at least one of associated relationships that:
a sending time of the first reference signal resource set and a sending time of the second reference signal resource set are in a same time unit or in adjacent time units;
a difference between the sending time of the first reference signal resource set and the sending time of the second reference signal resource set is less than a first preset time threshold;
a measuring time of the first reference signal resource set and a measuring time of the second reference signal resource set are in a same time unit or adjacent time units;
a difference between the measuring time of the first reference signal resource set and the measuring time of the second reference signal resource set is less than a second preset time threshold;
a measurement result reporting time of the first reference signal resource set and a measurement result reporting time of the second reference signal resource set are in a same time unit or adjacent time units; or
a difference between the measurement result reporting time of the first reference signal resource set and the measurement result reporting time of the second reference signal resource set is less than a third preset time threshold.

6. The method according to claim 2, wherein the time screening condition comprises at least one of conditions that:
all samples in a time window corresponding to the first sample are valid samples;
a number of valid samples in the time window corresponding to the first sample is greater than a fourth number threshold;
there are at least P1 valid samples in a first preset time period before time corresponding to the first sample, wherein P1 is a positive integer;
there are at least P2 valid samples in a second preset time period after the time corresponding to the first sample, wherein P2 is a positive integer; or
all P3 consecutive samples containing the first sample are valid samples, wherein P3 is a positive integer;
wherein the time corresponding to the first sample represents any one of: a sending time, a measuring time or a measurement result reporting time for a reference signal resource set corresponding to the first sample.

7. The method according to claim 6, wherein different time domain locations of the first sample in the time window correspond to different time screening conditions.

8. The method according to claim 7, wherein,
in a case where the first sample is a last sample in the time window, a time screening rule corresponding to the first sample comprises that there are at least valid samples with a first preset number in the first preset time period before the time corresponding to the first sample; or
in a case where the first sample is a first one of samples in the time window, a time screening rule corresponding to the first sample comprises that there are at least valid samples with a second preset number in the second preset time period after the time corresponding to the first sample; or
in a case where the first sample is a sample other than a first one of samples and a last sample in the time window, a time screening rule corresponding to the first sample comprises that: there are at least valid samples with a first preset number in the first preset time period before the time corresponding to the first sample, and there are at least valid samples with a second preset number in the second preset time period after the time corresponding to the first sample.

9. The method according to claim 1, wherein the M samples in the data set are sent sequentially according to an order of measuring moment.

10. The method according to claim 1, further comprising:
sending time information corresponding to the M samples.

11. The method according to claim 10, wherein the time information corresponding to the sample comprises: a sending time, a measuring time or a measurement result reporting time for a reference signal resource set corresponding to the sample.

12. The method according to claim 1, further comprising:
sending a bitmap sequence, wherein the bitmap sequence comprises multiple indicator bits, and an indicator bit is used to indicate whether the data set comprises a sample captured at a time instance corresponding to the indicator bit.

13. A data set receiving method, **characterized in that** the method is applied to a second communication node and comprises:
receiving a data set, wherein the data set comprises M samples, the M samples are screened out from N samples based on a preset rule, N is a positive integer, and M is a positive integer less than or equal to N.

14. The method according to claim 13, wherein the preset rule represents that a first sample satisfies at laser one of rules that:
the first sample is a valid sample;
a second sample associated with the first sample is a valid sample; or
the first sample satisfies a time screening condition;
wherein the first sample is any sample in the data set.

15. The method according to claim 14, wherein the valid sample satisfies at least one of requirements that:
a sample parameter of the valid sample satisfies a corresponding parameter threshold requirement;
a number of sample parameters that satisfies the parameter threshold requirement in the valid sample is greater than a first number threshold;
all first-type sample parameters in the valid sample satisfy the parameter threshold requirement;
all second-type sample parameters in the valid sample satisfy the parameter threshold requirement;
a number of first-type sample parameters that satisfy the parameter threshold requirement in the valid sample is greater than a second number threshold; or
a number of second-type sample parameter that satisfy the parameter threshold requirement in the valid sample is greater than a third number threshold;
wherein the first-type sample parameters are obtained by measuring a first-type reference signal resource in the reference signal resource set, and the second-type sample parameter are obtained by measuring a second-type reference signal resource in the reference signal resource set or the reference signal resource set.

16. The method according to claim 14, wherein the first sample is a sample obtained by a measurement for a first reference signal resource set, the second sample is a sample obtained based on a measurement for a second reference signal resource set, and there is an associated relationship between the first reference signal resource set and the second reference signal resource set.

17. The method according to claim 16, wherein the associated relationship between the first reference signal resource set and the second reference signal resource set satisfies at least one of associated relationship that:
a sending time of the first reference signal resource set and a sending time of the second reference signal resource set are in a same time unit or adjacent time units;
a difference between the sending time of the first reference signal resource set and the sending time of the second reference signal resource set is less than a first preset time threshold;
a measuring time of the first reference signal resource set and a measuring time of the second reference signal resource set are in a same time unit or adjacent time units;
a difference between the measuring time of the first reference signal resource set and the measuring time of the second reference signal resource set is less than a second preset time threshold;
a measurement result reporting time of the first reference signal resource set and a measurement result reporting time of the second reference signal resource set are in a same time unit or adjacent time units; or
a difference between the measurement result reporting time of the first reference signal resource set and the measurement result reporting time of the second reference signal resource set is less than a third preset time threshold.

18. The method according to claim 14, wherein the time screening condition comprises at least one of conditions that:
all samples in a time window corresponding to the first sample are valid samples;
a number of valid samples in the time window corresponding to the first sample is greater than a fourth number threshold;
there are at least P1 valid samples in a first preset time period before time corresponding to the first sample, wherein P1 is a positive integer; or
there are at least P2 valid samples in a second preset time period after the time corresponding to the first sample, wherein P2 is a positive integer;
all P3 continuous samples containing the first sample are valid samples, and P3 is a positive integer;
wherein the time corresponding to the first sample represents any one of a sending time, a measuring time or a measurement result reporting time of a reference signal resource set corresponding to the first sample.

19. The method according to claim 18, wherein different time domain locations of the first sample in the time window correspond to different time screening conditions.

20. The method according to claim 19, wherein,
in a case where the first sample is a last sample in the time window, a time screening rule corresponding to the first sample comprises that there are at least valid samples with a first preset number in the first preset time period before the time corresponding to the first sample; or
in a case where the first sample is a first one of samples in the time window, a time screening rule corresponding to the first sample comprises that there are at least valid samples with a second preset number in the second preset time period after the time corresponding to the first sample; or
in a case where the first sample is a sample other than a first one of samples and a last sample in the time window, a time screening rule corresponding to the first sample comprises that: there are at least valid samples with a first preset number in the first preset time period before the time corresponding to the first sample, and there are at least valid samples with a second preset number in the second preset time period after the time corresponding to the first sample.

21. The method according to claim 13, further comprising:
determining time information of the M samples according to a receiving order of the M samples in the data set.

22. The method according to claim 13, further comprising:
receiving time information corresponding to the M samples.

23. The method according to claim 22, wherein the time information corresponding to the sample comprises a sending time, a measuring time or a measurement result reporting time of a reference signal resource set corresponding to the sample.

24. The method according to claim 13, further comprising:
receiving a bitmap sequence, wherein the bitmap sequence comprises multiple indicator bits, and an indicator bit is used to indicate whether the data set comprises a sample captured at a moment corresponding to the indicator bit.

25. A communication apparatus, **characterized by** comprising: a memory and a processor , wherein the processor is coupled with the memory, the memory is configured to store instructions executable by the processor, and the processor, upon executing the instructions, performs the method according to any one of claims 1 to 24.

26. A computer-readable storage medium, **characterized by** the computer-readable storage medium has computer instructions stored thereon, and the computer instructions, upon being executed on a communication apparatus, enable the communication apparatus to perform the method according to any one of claims 1 to 24.
